# EUROPÄISCHE PATENTSCHRIFT

(11) **EP 2 369 694 B1**
(45) Veröffentlichungstag und Bekanntmachung des Hinweises auf die Patenterteilung: **14.08.2013**
(21) Anmeldenummer: 10157672.6
(22) Anmeldetag: 25.03.2010
(51) Int. Cl.: H01R 13/70, H04L 12/40

(54) **Anschlussvorrichtung und Automatisierungsgerät**
Connection device and automation device
Dispositif de raccordement et appareil d'automatisation

(43) Veröffentlichungstag der Anmeldung: 28.09.2011
(73) Patentinhaber: Siemens Aktiengesellschaft, 80333 München (DE)
(72) Erfinder: Bräunlich, Michael, 09117 Chemnitz (DE); Böhme, Hagen, Dr., 09235 Burkhardtsdorf (DE); Griessbach, Gunter, 09423 Gelenau (DE); Rochlitzer, Daniela, 09114 Chemnitz (DE); Schmidt, Dirk, 08321 Zschorlau/OT Albernau (DE); Weissbach, Bernhard, Dr., 09669 Frankenberg (DE)

(56) Entgegenhaltungen:
- EP-A2- 1 353 418
- DE-A1- 10 242 921
- US-B1- 6 410 869

## Beschreibung

Die Erfindung betrifft eine Anschlussvorrichtung, umfassend ein erstes Anschlussmittel für eine erste Datenleitung, ein zweites Anschlussmittel für eine zweite Datenleitung, ein drittes Anschlussmittel, ein Verbindungsmittel, welches zur elektrischen Verbindung des ersten und des zweiten Anschlussmittels mit dem dritten Anschlussmittel ausgestaltet ist.

Des Weiteren betrifft die Erfindung ein Automatisierungsgerät mit einer Anschlussvorrichtung, ausgestaltet für den Betrieb an einem Feldbus, mit einem Gegenstück zum Anschluss der Anschlussvorrichtung.

Es ist bekannt, dass in der Automatisierungstechnik zur Vernetzung von Automatisierungsgeräten, beispielsweise Feldbussysteme, neben einer sternförmigen Topologie häufig als Linientopologie aufgebaut sind. Insbesondere bei auf der Ethernet-Technologie basierenden Bussystemen, z.B. ein PROFINET, hat die Linientopologie den Nachteil, dass ein Abschalten eines Busteilnehmers, beispielsweise eines Automatisierungsgerätes, oder dass Abziehen eines Datenkabels des Busses, auch die nachfolgenden Busteilnehmer mit abtrennt. Austauschvorgänge bzw. Serviceaktionen an den Busteilnehmern oder daran angeschlossenen Automatisierungsgeräten in einem laufenden Betrieb der Anlage sind damit erschwert bzw. nicht möglich.

Aus der US 6,410,869 B1 ist eine Anschlussvorrichtung gemäß dem Oberbegriff von Anspruch 1 bekannt.

Auch die DE 102 42 921 A1 zeigt eine Anschlussvorrichtung für eine erste, zweite und dritte Datenleitung, wodurch ein Kommunikationsstrang aufgebaut wird.

Die Aufgabe der vorliegende Erfindung ist es daher, eine Anschlussvorrichtung bereitzustellen, welche es ermöglicht, bei einer Aufbauart von Automatisierungsgeräten in Ethernet-Technolgie und in Linientopologie ein Abtrennen der Anschlussvorrichtung von einem Automatisierungsgerät zu ermöglichen ohne dass die Kommunikationsverbindungen zu weiteren Automatisierungskomponenten unterbrochen wird.

Eine Lösung für diese Aufgabe ist durch die Merkmalskombination des Anspruchs 1 für die Anschlussvorrichtung gegeben.

Ein für die Linientopologie ausgelegtes Automatisierungsgerät, an welches die Anschlusseinheit angeschlossen ist, wobei das Automatisierungsgerät nach der PROFINET Technologie aufgebaut ist, weist in der Regel zwei Datenleitungen auf, wobei eine erste Datenleitung eine kommende Datenleitung ist und eine zweite Datenleitung eine gehende Datenleitung ist. Da vorzugsweise innerhalb des Automatisierungsgerätes ein 2-Port-Switch angeordnet ist, an denen die genannten Datenleitungen ihre Signale weitergeben, sind die bekannten Anschlussvorrichtungen so aufgebaut, dass die erste Datenleitung und die zweite Datenleitung direkt auf den innerhalb des Automatisierungsgerätes angeordneten 2-Port-Switch geschaltet werden. Für den Fall, dass an die Anschlussvorrichtung kein Automatisierungsgerät angeschlossen ist, ist die Linientopologie an dieser Stelle unterbrochen. Mit Vorteil kommt in der Anschlussvorrichtung für diesen Unterbrechungsfall die Umschalteinheit, welche mit dem Verbindungsmittel derart zusammenwirkt, dass diese Unterbrechung nicht auftritt zum Einsatz.

Auch könnte die Anschlussvorrichtung ein Mittel zur mechanischen Betätigung der Umschalteinheit aufweisen. Beispielsweise ist es denkbar, dass bei einem Einsteckvorgang der Anschlussvorrichtung in das dazugehörige Automatisierungsgerät ein Schiebemechanismus ausgelöst wird, welcher wiederum in der Umschalteinheit mechanische Kontakte betätigt, die das Verbindungsmittel derart umschalten, dass entweder die erste und die zweite Datenleitung getrennt auf den 2-Port-Switch innerhalb des Automatisierungsgerätes geführt werden können oder entsprechend wenn die Anschlussvorrichtung nicht gesteckt ist die erste und die zweite Datenleitung durchverbunden werden.

Das dritte Anschlussmittel weist den Signalkontakt auf, welcher mit der Umschalteinheit in Verbindung steht, um bei an das dritte Anschlussmittel angeschlossenem Gegenstück ein Signal an die Umschalteinheit zu legen. Bei dieser Ausführungsart könnte beispielsweise ein Relais mit Ruhestromkontakten in dem Anschlussmittel vorhanden sein. Liegt eine Spannung an dem Signalkontakt an, so könnte die Erregerspule des Relais mit Spannung beaufschlagt werden und die entsprechenden Relaiskontakte schalten die erste und die zweite Datenleitung separat über das dritte Anschlussmittel auf den innerhalb des Automatisierungsgerätes angeordneten 2-Port-Switch. Liegt anders herum keine Signalspannung an dem Signalkontakt an, so werden die Signalleitungen der ersten und zweiten Datenleitung durch die Ruhestromkontakte derart verbunden, dass die Signalleitungen innerhalb des Feldbusses durchgeschleift werden. Anstelle der Relaisschaltung ist es auch möglich Halbleiterschaltungen, z.B. FET (Feld Efect Transistoren) einzusetzen. Da die FETs ohne eine anliegende Spannung leitend sind und mit dem Anstecken durch eine Signalspannung sperrende werden.

Dabei ist die Anschlussvorrichtung mit ihrem ersten und zweiten Anschlussmittel vorzugsweise dazu ausgestaltet, Ethernet-Datenleitungen aufzunehmen. Dies können bekannte RJ45 Steckkontakte oder auch Schneidklemmverbindungen sein.

Nach dem Prinzip Stecker und Steckdose stehen die Anschlussvorrichtung und das nachfolgend beschriebene Automatisierungsgerät miteinander in Beziehung.

Bei einem Automatisierungsgerät ausgestaltet für den Betrieb an einem Feldbus, mit einem Gegenstück zum Anschluss einer zuvor beschriebenen Anschlussvorrichtung wird das eingangs genannte Problem dadurch gelöst, dass das Gegenstück einen Steuerkontakt aufweist, welcher derart beschaltet ist, das ein Signal über den Steuerkontakt an den Signalkontakt weiterleitbar ist und dadurch die Umschalteinheit steuerbar ist.

Bevorzugt weist dabei das Automatisierungsgerät ein Steuermittel auf, welches über eine zweite Steuerleitung mit dem Steuerkontakt verbunden ist, wobei das Steuermittel dazu ausgestaltet ist in Abhängigkeit von einem Betriebszustand des Automatisierungsgerätes das Signal bereitzustellen.

Mit dieser Ausführungsart eines Automatisierungsgerätes in Kombination mit der elektrisch betätigbaren Anschlussvorrichtung ergeben sich folgende Anwendungsmöglichkeiten: Zur Diagnose- oder Inbetriebnahmezwecke können die an einem aus Ethernetleitungen aufgebauten Feldbus angeschlossenen Automatisierungsgeräte wahlweise ab- und zugeschaltet werden, ohne die Kommunikation für andere Feldbusteilnehmer auf dem Feldbus zu beeinflussen. Automatisierungsgeräte können beispielsweise zu Energieeinsparungszwecken vollständig abgeschaltet werden. Nach dem erneuten Zuschalten des Automatisierungsgerätes und einem Booten des Automatisierungsgerätes können diese wieder in dem Feldbus integriert werden, da die Steuermittel innerhalb des Automatisierungsgerätes die Umschalteinheit in der Anschlussvorrichtung entsprechend ansteuern. Auch ist ein automatisiertes Zuschalten von Reserve- oder Erweiterungskomponenten möglich.

Der Vorteil der vorgeschlagenen Lösung besteht darin, dass bei Ausfall, Service oder Abschaltung von Automatisierungsgeräten an in Linientopologie aufgebauten Anlagen nur der direkt betroffene Anlagenteil von der Kommunikation getrennt werden kann, während die Kommunikationsfähigkeit mit anderen Anlagenteilen bestehen bleibt bzw. nach einer kurzen Störung wieder herstellbar ist.

Bei Automatisierungssystemen, welche mit der vorgeschlagenen Lösung aufgebaut werden, sind die Automatisierungsgeräte mit ihren Kommunikationsbausteinen derart herzurichten, dass eine kurzzeitige Unterbrechung und gegebenenfalls Prellvorgänge an den Kontakten, welche zu Kommunikationsstörungen führen können, beherrscht werden. Dabei sollte der Anlagenaufbau mit den Automatisierungsgeräten und den Feldbussen derart ausgelegt werden, dass im Falle eines Abziehens einer Anschlussvorrichtung mit dem darauf folgenden Durchverbinden der Datenleitungen, eine maximale zulässige Leitungslänge im Feldbusverbund nicht überschritten wird. Auch sollten die Kommunikationsschaltungen bzw. das Steuermittel dazu ausgestaltet werden, dass die elektrischen Eigenschaften der Übertragungsphysik eingehalten wird (Impedanzverhältnisse, Autonegotiation).

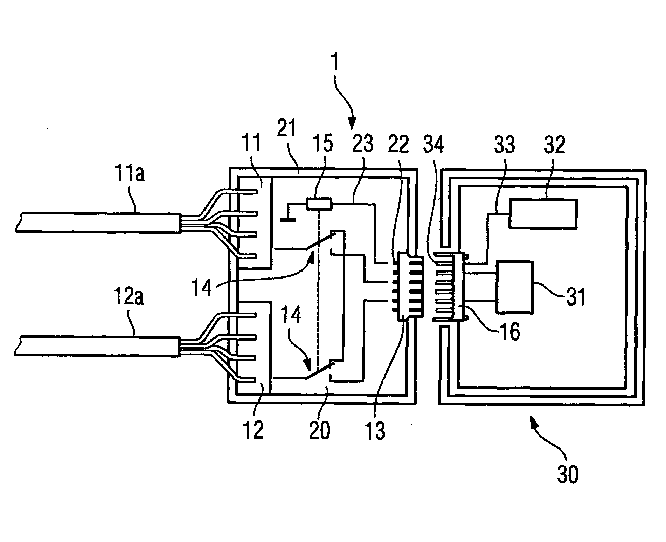

Eine Anschlussvorrichtung und ein Automatisierungsgerät sind in der Figur dargestellt.

Eine Anschlussvorrichtung 1 ist ausgestaltet um an ein Automatisierungsgerät 30 angesteckt zu werden. Dabei umfasst die Anschlussvorrichtung 1 ein erstes Anschlussmittel 11 für eine erste Datenleitung 11a, ein zweites Anschlussmittel 12 für eine zweite Datenleitung 12a, über ein drittes Anschlussmittel 13 ist der elektrische Kontakt zu dem Automatisierungsgerät 30 herstellbar, wobei das dritte Anschlussmittel 13 in ein passendes Gegenstück 16 des Automatisierungsgerätes 30 gesteckt wird. Innerhalb einer Umhausung 21 weist die Anschlussvorrichtung 1 eine Leiterplatte 20 auf, auf welcher eine Umschalteinheit 15 und ein Verbindungsmittel 14 untergebracht sind. Die Umschalteinheit 15 kann, angedeutet über eine Wirklinie, das Verbindungsmittel 14 derart betätigen, dass elektrische Datensignale der ersten Datenleitung 11a und der zweiten Datenleitung 12a entweder direkt über das dritte Anschlussmittel 13 an das Gegenstück 16 des Automatisierungsgerätes weitergegeben werden oder falls das Automatisierungsgerät 30 nicht an das dritte Anschlussmittel 13 angeschlossen sein sollte, die erste Datenleitung 11a und die zweite Datenleitung 12a entsprechend Durchverbinden, so dass eine Kommunikation auf einem Feldbus nicht beeinflusst wird. Für den normalen Kommunikationsfall gilt, dass die erste Datenleitung 11a über die Verbindungsmittel 14 so verschaltet werden, dass sie an einem ersten Eingang eines Switch 31 angeschaltet ist und die zweite Datenleitung 12a dementsprechend an einen zweiten Eingang des Switches 31 angeschaltet ist. Der Switch 31 stellt in diesem Fall einen 2-Port-Switch dar.

Die Umschalteinheit 15 ist über eine erste Steuerleitung 23 mit einem Signalkontakt 22 verbunden. Dieser Signalkontakt 22 ist innerhalb des dritten Anschlussmittels 13 angeordnet. Im gesteckten Zustand greift der Signalkontakt 22 in einem Steuerkontakt 34 des Gegenstückes 16 ein. An den Steuerkontakt 34 ist über eine zweite Steuerleitung 33 ein Steuermittel 32 angeschlossen. Das Steuermittel 32 ist derart ausgestaltet, dass es in Abhängigkeit von einem Betriebszustand des Automatisierungsgerätes 30 ein Signal über die zweite Steuerleitung 33, den Steuerkontakt 34, den Signalkontakt 22, die erste Steuerleitung 23 an die Umschalteinheit 15 bereitstellen kann. Dieses bereitgestellte Signal sorgt dafür, dass die Umschalteinheit 15 in Verbindung mit dem Verbindungsmittel 14 die erste Datenleitung 11a und die zweite Datenleitung 12a entsprechend an den Switch 31 verschaltet wird.

Ein Umschalten bzw. ein Verschalten der Datenleitungen in der Anschlussvorrichtung 1 kann beispielsweise durch drei Umschaltursachen ausgelöst werden. Ein Fehlerfall, beispielsweise ein Spannungsausfall des Automatisierungsgerätes, ein Abziehen bzw. ein nicht gesteckt sein der Anschlussvorrichtung 1 oder ein bewusstes, funktionelles Abschalten durch das Automatisierungsgerät 30 für z.B. einen Diagnosemodus oder einen Energiesparmodus.

Sollte im Fehlerfall des Automatisierungsgerätes 30 oder für den Fall, dass die Anschlussvorrichtung 1 nicht gesteckt ist, kein entsprechendes Signal an der Umschalteinheit 15 ankommen, so wirkt die Umschalteinheit 15 und das Verbindungsmittel 14 derart zusammen, dass die erste Datenleitung 11a und die zweite Datenleitung 12a durchverbunden werden.

In der Figur sind die Verbindungsmittel 14 symbolisch dargestellt, d.h. ein Durchverbinden von mehreren Adern der Datenleitungen über mehrere den Adern zugeordnete Schalter ist ebenso möglich.

## Patentansprüche

1. Anschlussvorrichtung (1), umfassend
ein erstes Anschlussmittel (11) für eine erste Datenleitung (11a),
ein zweites Anschlussmittel (12) für eine zweite Datenleitung (12a),
ein drittes Anschlussmittel (13),
ein Verbindungsmittel (14), welches zur elektrischen Verbindung des ersten und des zweiten Anschlussmittels (11, 12) mit dem dritten Anschlussmittel (13) ausgestaltet ist,
eine Umschalteinheit (15), welche derart mit dem Verbindungsmittel (14) zusammenwirkt, dass für den Fall, wenn das dritte Anschlussmittel (13) an ein Gegenstück (16) angeschlossen ist, das erste Anschlussmittel (11) und das zweite Anschlussmittel (12) mit dem dritten Anschlussmittel (13) verbunden sind, und für den Fall, dass an das dritte Anschlussmittel (13) kein Gegenstück (16) angeschlossen ist, das erste Anschlussmittel (11) mit dem zweiten Anschlussmittel (12) zum Durchverbinden der Datenleitungen (11a,12a) verbunden ist, **dadurch gekennzeichnet,**
**dass** das dritte Anschlussmittel (13) einen Signalkontakt (22) aufweist, welcher mit der Umschalteinheit (15) in Verbindung steht, um bei an das dritte Anschlussmittel (13) angeschlossenem Gegenstück (16) ein Signal an die Umschalteinheit (15) zu legen.

2. Anschlussvorrichtung (1) nach Anspruch 1, wobei das erste und das zweite Anschlussmittel (11,12) zum Anschluss von Ethernet-Datenleitungen ausgelegt sind.

3. Automatisierungsgerät (30) mit einer Anschlussvorrichtung (1) nach Anspruch 1, ausgestaltet für den Betrieb an einem Feldbus, mit einem Gegenstück (16) zum Anschluss der Anschlussvorrichtung (1),
**gekennzeichnet durch**
einen Steuerkontakt (34) im Gegenstück (16), welcher derart beschaltet ist, dass ein Signal über den Steuerkontakt (34) an den Signalkontakt (22) weiterleitbar ist und **dadurch** die Umschalteinheit (15) steuerbar ist.

4. Automatisierungsgerät (30) nach Anspruch 3, aufweisend ein Steuermittel (32), welches über eine zweite Steuerleitung (33) mit dem Steuerkontakt (34) verbunden ist, wobei das Steuermittel (32) dazu ausgestaltet ist, in Abhängigkeit von einem Betriebszustand das Signal bereitzustellen.

5. Automatisierungsgerät (30) nach Anspruch 4, wobei der Betriebszustand durch einen Spannungsausfall gekennzeichnet ist und das Steuermittel derart ausgestaltet ist, dass es dennoch ein Signal absetzen kann.

## Claims

1. Terminating device (1) comprising
a first terminating means (11) for a first data line (11a),
a second terminating means (12) for a second data line (12a),
a third terminating means (13),
a connecting means (14) which is arranged for electrically connecting the first and the second terminating means (11, 12) to the third terminating means (13),
a switch-over unit (15) which interacts with the connecting means (14) in such a manner that in the case where the third terminating means (13) is terminated at a counterpiece (16), the first terminating means (11) and the second terminating means (12) are connected to the third terminating means (13) and in the case where no counterpiece (16) is terminated at the third terminating means (13), the first terminating means (11) is connected to the second terminating means (12) for connecting through the data lines (11a, 12a),
**characterized in that** the third terminating means (13) has a signal contact (22) which is connected to the switch-over unit (15) in order to apply a signal to the switch-over unit (15) when the counterpiece (16) is terminated at the third terminating means (13).

2. Terminating device (1) according to Claim 1, wherein the first and the second terminating means (11, 12) are arranged for terminating Ethernet data lines.

3. Programmable controller (30) having a terminating device (1) according to Claim 1, arranged for operation on a field bus, comprising a counterpiece (16) for terminating the terminating device (1), **characterized by** a control contact (34) in the counterpiece (16) which is wired in such a manner that a signal can be forwarded via the control contact (34) to the signal contact (22) and, as a result, the switch-over unit (15) is controllable.

4. Programmable controller (30) according to Claim 3, having a control means (32) which is connected to the control contact (34) via a second control line (33), the control means (32) being arranged for providing the signal in dependence on an operating state.

5. Programmable controller (30) according to Claim 4, the operating state being **characterized by** a voltage failure and the control means being arranged in such a manner that it can deliver a signal nevertheless.

## Revendications

1. Dispositif ( 1 ) de raccordement, comprenant un premier moyen ( 11 ) de raccordement pour une première ligne ( 11a ) de données,
un deuxième moyen ( 12 ) de raccordement pour une deuxième ligne ( 12a ) de données,
un troisième moyen ( 13 ) de raccordement,
un moyen ( 14 ) de liaison, qui est conformé pour la liaison électrique du premier et du deuxième moyens ( 11, 12 ) de raccordement au troisième moyen ( 13 ) de raccordement,
une unité ( 15 ) de commutation, qui coopère avec le moyen ( 14 ) de liaison, de manière à ce que, dans le cas où le troisième moyen ( 13 ) de raccordement est raccordé à une pièce ( 16 ) antagoniste, le premier moyen ( 11 ) de raccordement et le deuxième moyen ( 12 ) de raccordement sont reliés au troisième moyen ( 13 ) de raccordement et, dans le cas où une pièce ( 16 ) antagoniste n'est pas raccordée au troisième moyen ( 13 ) de raccordement, le premier moyen ( 11 ) de raccordement est relié au deuxième moyen ( 12 ) de raccordement pour la liaison des lignes ( 11a, 12a ) de données,
**caractérisé**
**en ce que** le troisième moyen ( 13 ) de raccordement a un contact ( 22 ) de signal, qui est en liaison avec l'unité ( 15 ) de commutation pour, lorsqu'une pièce ( 16 ) antagoniste est raccordée au troisième moyen ( 13 ) de raccordement, donner un signal à l'unité ( 15 ) de commutation.

2. Dispositif ( 1 ) de raccordement suivant la revendication 1, dans lequel le premier et le deuxième moyens ( 11, 12 ) de raccordement sont conçus pour le raccordement de lignes de données Ethernet.

3. Appareil ( 30 ) d'automatisation ayant un dispositif ( 1 ) de raccordement suivant la revendication 1, conformé pour le fonctionnement sur un bus de terrain, ayant une pièce ( 16 ) antagoniste pour le raccordement du dispositif ( 1 ) de raccordement,
**caractérisé par**
un contact ( 34 ) de commande dans la pièce ( 16 ) antagoniste, qui est monté de manière à pouvoir acheminer un signal au contact ( 22 ) de signal par l'intermédiaire du contact ( 34 ) de commande et de manière ainsi à pouvoir commander l'unité ( 15 ) de commutation.

4. Appareil ( 30 ) d'automatisation suivant la revendication 3, ayant un moyen ( 32 ) de commande, qui est relié au contact ( 34 ) de commande par une deuxième ligne ( 33 ) de commande, le moyen ( 32 ) de commande étant conformé pour mettre le signal à disposition en fonction d'un état de fonctionnement.

5. Appareil ( 30 ) d'automatisation suivant la revendication 4, dans lequel l'état de fonctionnement est **caractérisé par** une panne de tension et le moyen de commande est conformé de manière à pouvoir cependant transmettre un signal.
